# EUROPÄISCHE PATENTSCHRIFT

(11) **EP 1 412 155 B1**
(45) Veröffentlichungstag und Bekanntmachung des Hinweises auf die Patenterteilung: **01.07.2009**
(21) Anmeldenummer: 02751126.0
(22) Anmeldetag: 10.07.2002
(51) Int. Cl.: B29C 45/14

(54) **VERFAHREN ZUM HINTERSPRITZEN VON FOLIEN**
METHOD FOR IN-MOLD LAMINATION OF FOILS
PROCEDE DE MOULAGE PAR INJECTION A L'ARRIERE DE FILMS

(30) Priorität: 23.07.2001 DE 10135816
(43) Veröffentlichungstag der Anmeldung: 28.04.2004
(73) Patentinhaber: Bayer MaterialScience AG, 51368 Leverkusen (DE)
(72) Erfinder: KAMINSKI, Axel, 42929 Wermelskirchen (DE); KÜNZEL, Roland, 51381 Leverkusen (DE)
(86) Internationale Anmeldenummer: PCT/EP2002/007666
(87) Internationale Veröffentlichungsnummer: WO 2003/011555

(56) Entgegenhaltungen:
- EP-A- 0 546 234
- EP-A- 1 008 527
- WO-A-92/16349
- DE-A- 10 036 982
- PATENT ABSTRACTS OF JAPAN vol. 16, no. 34 (M-1204), 28. Januar 1992 (1992-01-28) & JP 03 243312 A (MITSUBISHI PLASTICS IND LTD), 30. Oktober 1991 (1991-10-30)

## Beschreibung

Die Erfindung betrifft ein Verfahren zum Hinterspritzen von Folien, insbesondere von bedruckten Folien zum Schutz der Dekoroberfläche gegen Verkratzen oder Ablösung.

Im Zusammenhang mit der Anbringung z.B. von Typenschildern auf der Oberfläche von thermoplastischen Formteilen; wie z.B. für elektrische Handgeräte ist es bekannt, Folien im Formwerkzeug eines Spritzgießwarkzeugs innerhalb eines Fixierungsrahmens vorzulegen und durch Anspritzen von thermoplastischem Kunststoff mit dem Formteil zu verbinden. Beide bekannten Varianten, das Einlegen einer Folie in eine Vertiefung der Wand des Formhohlraums und das Einlegen der Folie in einen Formrahmen, der die Folie im Formhohlraum umgibt, führen zu Formteilen, bei denen die Kante der Folie nicht von thermoplastischem Kunststoff umgeben ist.

In DE-A-10036982 wird eine Filmhaltevorrichtung offenbart, bei der der Film mit Positionierstiften an einer bestimmten Position einer Formfläche gehalten wird. Bei Verwendung dieser Vorrichtung ist es jedoch notwendig, den Film mit Löchern zur Aufhängung zu versehen.

Aufgabe der Erfindung ist es daher, ein Spritzgießverfahren zu Entwickeln, das einen Kantenschutz der in den Formhohlraum eingelegten Folie ermöglicht und somit mögliche Angriffsflächen für mechanische Einwirkung insbesondere auf die Kanten der Folie verhindert, ohne die Folie zum Zwecke der Positionierung im Formwerkzeug beschädigen zu müssen.

Die Aufgabe wird erfindungsgemäß dadurch gelöst, dass mit Hilfe einer modifizierten SpritzgieBwerkzeugkonstruktion die Folien teilweise in einer Werkzeughälfte, die die nicht sichtbare Formteiloberfläche formt, fixiert werden und während des Gießprozesses mit der fortschreitenden Front des thermoplastischen Kunststoffes auf die gegenüberliegende Werkzeugseite übertragen werden, wobei die Begrenzungskanten in der Folie von Kunststoff umschlossen werden.

Gegenstand der Erfindung ist ein Verfahren zum Hinterspritzen von insbesondere auf ihrer Rückseite bedruckten Folien mit thermoplastischem Kunststoffs, in einer Spritzgießeinrichtung, dadurch gekennzeichnet, dass die Folie im Formhohlraum des SpritzgieBwerkzeugs zunächst mit ihrer der Front der Schmelze entgegenstehenden Kante an der Wand des Formhohlraums anliegt, während der Rest der Folie von der Wand beabstandet gehalten wird, und dass der von der Wand beabstandete Teil der Folie durch die eintretende, im Formhohlraum fortschreitende Schmelzfront an die Wand gedrückt wird und simultan die Halterung der Folie gelöst wird, so dass sich auch der Rest der Folie an die Wand des Formhohlraums anlegt.

Bevorzugt ist ein Verfahren bei dem die Folie vor Eintritt der Schmelze in den Formhohlraum mit Hilfe eines Niederhalters an die Wand des Formhohlraums angelegt wird und der Niederhalter bei Eintritt der Schmelze zurückbewegt wird.

Als Folienmaterial wird ein Kunststoff bevorzugt ausgewählt aus der Reihe Polycarbonat, Polyurethan, Polyester, Polyvinylchlorid verwendet.

In einem besonders bevorzugten Verfahren wird als Folienmaterial Polycarbonat verwendet.

Der thermoplastische Kunststoff ist bevorzugt ausgewählt aus der Reihe: Polyamid, Polyester, Polyolefin, Styrol-Copolymerisat, Polyphenylenoxid, Polycarbonat, Polyphenylensulfid, Polyvinylchlorid, Polyurethan oder möglichen Mischungen der genannten Polymere.

Besonders bevorzugt wird als thermoplastischer Kunststoff Polyamid oder Polycarbonat verwendet.

In einer weiteren bevorzugten Ausführung des Verfahrens wird die Folie vor dem Eintritt der Schmelze an ihrem unteren von der Schmelzefront abgewandten Teil an der der Wand gegenüberliegenden Wand des Formhohlraums, insbesondere mit einem unter Vakuum stehenden Sinterblock, gehalten und mit Fortschreiten der Schmelzefront im Formhohlraum gelöst.

Besonders bevorzugt ist auch ein Verfahren bei dem die Folie vor Eintritt der Schmelze an ihrem unteren von der Schmelzefront abgewandten Ende mit Hilfe mindestens eines aus dem Formhohlraum zurückziehbaren Anschlages positioniert ist, besonders bevorzugt mindestens mit zwei unteren und einem seitlichen Anschlag.

Mit Hilfe des erfindungsgemäßen Verfahrens ist es möglich, z.B. Typenschilder und dekorierte Folien auf Formteilen während des Spritzgießprozesses anzuformen und auf einen nachträglichen Klebeprozess zu verzichten. Hierdurch wird ein zusätzlicher Arbeitsgang gespart. Beim Einsatz von auf ihrer Rückseite bedruckten Folien, insbesondere Transparentenfolien ist ein Schutz des Dekors gegen Abrieb und mechanisches Ablösen aufgrund der Kantenumspritzung möglich.

Die Erfindung wird nachstehend anhand der Figuren beispielhaft näher erläutert.

Es zeigen
- Fig. 1: Das geöffnete Formwerkzeug mit Formhohlraum beim Einlegen der Folie.
- Fg. 2: Einen Querschnitt durch den Formhohlraum beim Eintritt des thermoplastischen Kunststoffs.
- Fig. 3: Einen weiteren Schritt, in dem das Ende der Folie aus dem Haltestift herausgehoben wird.
- Fig.4: Einen Querschnitt im Rückzug eines zweiten Ausrafferstifts aus dem Formhohlraum und
- Fig. 5: die Öffnung des Formhohlraums zur Entnahme des Formteils.
- Fig. 6: einen Querschnitt durch das Formteil.
- Fig. 6a: einen vergrößerten Ausschnitt aus Fig. 6.

### Beispiel

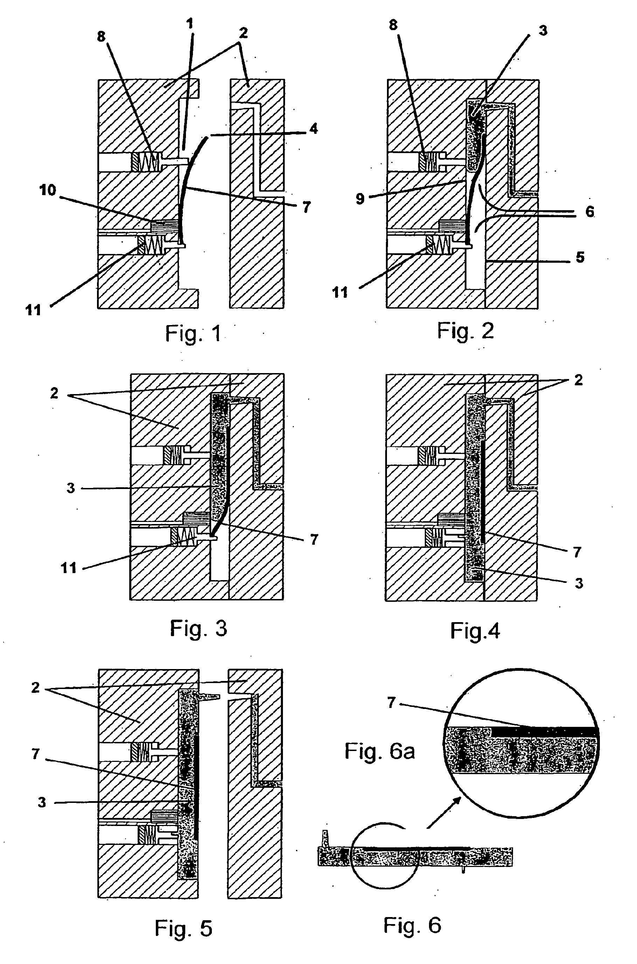

In Fig. 1 ist ein Querschnitt durch den geöffneten Formhohlraum 1 eines Spritzgießwerkzeuges 2 gezeigt, in dem die Folie 7 (eine EPC-Folie, die auf ihrer Rückseite bedruckt ist) an ihrer in Fig. 1 untenliegende Kante durch ein federbelasteten Auswerfer 11 auf der einen Wand 9 des Spritzgießwerkzeugs gehalten ist, während durch einen weiteren federbelasteten Auswerfer 8 das andere Ende der Folie 7, deren Kante 4 zum Eintrittskanal des thermoplastischen Kunststoffs 3 gerichtet ist, aufgerichtet werden und beim Schließen des Formhohlraums 1 an die gegenüberliegende Wand 5 des Formhohlraums angelegt wird, an dem die Folie 7 ihre endgültige Position finden soll.

In Fig. 2 ist gezeigt, dass nach Eintritt des thermoplastischen Kunststoffs 3, dieser die Folie 7 mit fortschreitender Front des thermoplastischen Kunststoffs 3 an die Wand 5 des Formhohlraumes 1 anlegt. Währenddessen wird der federbelastete Auswerfer 8 aus dem Formhohlraum 1 zurückgezogen und im weiteren schreitet die Schmelzefront 3 des thermoplastischen Kunststoffs (Polyamid 6) im Formhohlraum 1 weiter voran und legt die Folie 7 glatt an der Formhohlraumwand 5 an.

Fig. 3 ist zu sehen, dass das untere Ende der Folie 7 aus dem Haltestift 11 herausgehoben wird. Im weiteren wird der Formhohlraum 1 vollständig mit thermoplastischem Kunststoffs 3 gefiillt, wobei die Kanten der Folie 7 von thermoplastischem Kunststoff 3 umschlossen werden. Der Herstellungscyclus wird beendet, durch Öffnen des Formhohlraums 1 nach Fig. 5 und Auswerfen des fertigen Formteils.

Die Fig. 6 und 6a zeigen, wie sich die Kantenumspritzung der Folie 7 im Querschnitt schematisch darstellt. Das Folienschild ist von thermoplastischem Kunststoff 3 an den Kanten komplett umschlossen und bietet keine Angriffsmöglichkeit für ein mechanisches Entfernen des Schildes (Folie 7) oder ein seitliches Herauslösen der rückseitigen Bedruckung der Folie 7.

## Patentansprüche

1. Verfahren zum Hinterspritzen von insbesondere auf ihrer Rückseite bedruckten Folien mit thermoplastischem Kunststoff, in einer Spritzgießeinrichtung, **dadurch gekennzeichnet, dass** die Folie (7) im Formhohlraum (1) des Spritzgießwerkzeugs (2) so eingelegt wird, dass sie vor dem Eintritt der Kunststoffschmelze (3) zunächst mit ihrer der Front der Schmelze (3) entgegenstehenden Kante (4) an der Wand (5) des Formhohlraums (1) anliegt, während der Rest der Folie von der Wand beabstandet gehalten wird, und dass der von der Wand beabstandete Teil (6) der Folie (7) durch die eintretende, im Formhohlraum (1) fortschreitende Schmelzefront an die Wand (5) gedrückt wird und simultan die Halterung der Folie (7) gelöst wird, so dass sich auch der Rest der Folie (7) an die Wand (5) des Formhohlraums (1) anlegt.

2. Verfahren nach Anspruch 1, **dadurch gekennzeichnet, dass** die Folie vor Eintritt der Schmelze (3) in den Formhohlraum (1) mit Hilfe eines Niederhalters (8) an die Wand (5) des Formhohlraums (1) angelegt wird, und dass der Niederhalter (8) bei Eintritt der Schmelze zurückbewegt wird.

3. Verfahren nach einem der Ansprüche 1 oder 2, **dadurch gekennzeichnet, dass** das Folienmaterial ein Kunststoff ausgewählt aus der Reihe Polycarbonat, Polyurethan, Polyester, Polyvinylchlorid ist.

4. Verfahren nach einem der Ansprüche 1 bis 3, **dadurch gekennzeichnet, dass** der thermoplastische Kunststoff ausgewählt ist aus der Reihe: Polyamid, Polyester, Polyolefin, Styrol-Copolymerisat, Polyphenylenoxid, Polycarbonat, Polyphenylensulfid, Polyvinylchlorid, Polyurethan oder möglichen Mischungen der genannten Polymere.

5. Verfahren nach Anspruch 3, **dadurch gekennzeichnet, dass** als Folienmaterial Polycarbonat verwendet wird.

6. Verfahren nach Anspruch 4 oder 5, **dadurch gekennzeichnet, dass** als thermoplastischer Kunststoff Polyamid oder Polycarbonat verwendet wird.

7. Verfahren nach einen der Ansprüche 1 bis 6, **dadurch gekennzeichnet, dass** die Folie vor dem Eintritt der Schmelze an ihrem unteren, von der Schmelzefront (3) abgewandten Teil (6) an der der Wand (5) gegenüberliegenden Wand (9) des Formhohlraums (1), insbesondere mit einem unter Vakuum stehenden Sinterblock (10), gehalten und mit Fortschreiten der Schmelzfront (3) im Formhohlraum (1) gelöst wird.

8. Verfahren nach einem der Ansprüche 1 bis 7, **dadurch gekennzeichnet, dass** die Folie vor Eintritt der Schmelze an ihrem unteren, von der Schmelzefront angewandten Ende mit Hilfe mindestens eines aus dem Formhohlraums (1) zurückziehbaren Anschlages (11) positioniert ist, bevorzugt mit mindestens zwei unteren und einem seitlichen Anschlag, positioniert ist.

## Claims

1. Method for injecting a thermoplastic plastics material onto the back of, in particular, films that are printed on the back, in an injection moulding device, **characterised in that** the film (7) is placed in the mould cavity (1) of the injection moulding tool (2) in such a manner that, before the plastics melt (3) enters the mould cavity (1), the edge (4) of the film (7) that faces the front of the melt (3) initially abuts the wall (5) of the mould cavity (1) while the remainder of the film is held away from the wall, and **in that** the portion (6) of the film (7) that is away from the wall is pressed against the wall (5) by the incoming melt front advancing in the mould cavity (1) and the holding means for the film (7) is released at the same time so that the remainder of the film (7) also abuts the wall (5) of the mould cavity (1).

2. Method according to claim 1, **characterised in that**, before the melt (3) enters the mould cavity (1), the film is applied to the wall (5) of the mould cavity (1) by means of a holding-down device (8), and **in that** the holding-down device (8) is retracted when the melt enters.

3. Method according to either claim 1 or claim 2, **characterised in that** the film material is a plastics material selected from the group polycarbonate, polyurethane, polyester, polyvinyl chloride.

4. Method according to any one of claims 1 to 3, **characterised in that** the thermoplastic plastics material is selected from the group: polyamide, polyester, polyolefin, styrene copolymer, polyphenylene oxide, polycarbonate, polyphenylene sulfide, polyvinyl chloride, polyurethane, and possible mixtures of the mentioned polymers.

5. Method according to claim 3, **characterised in that** polycarbonate is used as the film material.

6. Method according to claim 4 or 5, **characterised in that** polyamide or polycarbonate is used as the thermoplastic plastics material.

7. Method according to any one of claims 1 to 6, **characterised in that**, before the melt enters the mould cavity (1), the film is held in its lower portion (6) that is remote from the melt front (3) against the wall (9) of the mould cavity (1) that faces the wall (5), in particular by a sintered block (10) under vacuum, and is released as the melt front (3) advances in the mould cavity (1).

8. Method according to any one of claims 1 to 7, **characterised in that**, before the melt enters the mould cavity (1), the film is positioned at its lower end that is remote from the melt front by means of at least one stop (11) which can be withdrawn from the mould cavity (1), preferably is positioned by at least two lower stops and one lateral stop.

## Revendications

1. Procédé de surmoulage par injection en particulier de feuilles imprimées sur le côté dorsal avec une matière synthétique thermoplastique, dans un dispositif de moulage par injection, **caractérisé en ce que** la feuille (7) est disposée dans la cavité de moule (1) de l'outil de moulage par injection (2) de telle manière qu'avant l'entrée de la masse fondue de matière synthétique (3), elle s'appuie tout d'abord avec son bord (4) opposé au front de masse fondue (3) sur la paroi (5) de la cavité de moule (1), tandis que le reste de la feuille est maintenu à distance de la paroi, et **en ce que** la partie (6) de la feuille (7) à distance de la paroi est poussée contre la paroi (5) par le front de masse fondue entrant, qui progresse dans la cavité de moule (1), et simultanément la fixation de la feuille (7) est supprimée de sorte que le reste de la feuille (7) s'appuie aussi contre la paroi (5) de la cavité de moule (1).

2. Procédé selon la revendication 1 **caractérisé en ce que** la feuille, avant l'entrée de la masse fondue (3) dans la cavité de moule (1), est appuyée contre la paroi (5) de la cavité de moule (1) à l'aide d'un dispositif de serrage (8), et **en ce que** le dispositif de serrage (8) est retiré lors de l'entrée de la masse fondue.

3. Procédé selon l'une des revendications 1 et 2 **caractérisé en ce que** le matériau de la feuille est une matière synthétique choisie dans la série polycarbonate, polyuréthane, polyester, poly(chlorure de vinyle).

4. Procédé selon l'une des revendications 1 à 3 **caractérisé en ce que** la matière synthétique thermoplastique est choisie dans la série : polyamide, polyester, polyoléfine, copolymère de styrène, poly(oxyde de phénylène), polycarbonate, poly(sulfure de phénylène), poly(chlorure de vinyle), polyuréthane ou des mélanges possibles des polymères cités.

5. Procédé selon la revendication 3 **caractérisé en ce qu'**un polycarbonate est utilisé comme matière de la feuille.

6. Procédé selon la revendication 4 ou 5 **caractérisé en ce qu'**un polyamide ou un polycarbonate est utilisé comme matière synthétique thermoplastique.

7. Procédé selon l'une des revendications 1 à 6 **caractérisé en ce que** la feuille, avant l'entrée de la masse fondue, est maintenue au niveau de sa partie inférieure (6) distante du front de masse fondue (3) contre la paroi (9) de la cavité de moule (1) opposée à la paroi (5), en particulier avec un bloc fritté (10) situé sous vide, et est dissoute avec la progression du front de masse fondue (3) dans la cavité de moule (1).

8. Procédé selon l'une des revendications 1 à 7 **caractérisé en ce que** la feuille, avant l'entrée de la masse fondue, est positionnée au niveau de son extrémité inférieure voisine du front de masse fondue à l'aide d'au moins une butée (11) pouvant être retirée de la cavité de moule (1), de préférence avec au moins deux butées inférieures et une butée latérale.
